# EUROPÄISCHE PATENTSCHRIFT

(11) **EP 2 483 730 B1**
(45) Veröffentlichungstag und Bekanntmachung des Hinweises auf die Patenterteilung: **06.11.2019**
(21) Anmeldenummer: 10749793.5
(22) Anmeldetag: 27.08.2010
(51) Int. Cl.: G02B 21/00, G01J 1/42, G01J 1/20

(54) **VERFAHREN ZUM ERZEUGEN VON BILDERN MIT ERWEITERTEM DYNAMIKUMFANG UND OPTISCHES GERÄT ZUR DURCHFÜHRUNG EINES SOLCHEN VERFAHRENS, INSBESONDERE LASER-SCANNING-MIKROSKOP**
METHOD FOR GENERATING IMAGES HAVING AN EXPANDED DYNAMIC RANGE AND OPTICAL DEVICE FOR CARRYING OUT SUCH A METHOD, IN PARTICULAR A LASER SCANNING MICROSCOPE
PROCÉDÉ POUR GÉNÉRER DES IMAGES À PLAGE DYNAMIQUE ÉLARGIE ET APPAREIL OPTIQUE POUR METTRE EN OEUVRE UN TEL PROCÉDÉ, NOTAMMENT MICROSCOPE À BALAYAGE LASER

(30) Priorität: 30.09.2009 DE 102009043746
(43) Veröffentlichungstag der Anmeldung: 08.08.2012
(73) Patentinhaber: Carl Zeiss Microscopy GmbH, 07745 Jena (DE)
(72) Erfinder: MÖHLER, Gunter, 04720 Mochau (DE); SCHMIDT, Dietmar, 07768 Bibra (DE); HOLUB, Oliver, 07743 Jena (DE)
(74) Vertreter: Loritz, Rainer
(86) Internationale Anmeldenummer: PCT/EP2010/005263
(87) Internationale Veröffentlichungsnummer: WO 2011/038815

(56) Entgegenhaltungen:
- WO-A1-02/01201
- DE-A1- 10 110 925
- DE-A1-102006 030 530
- JP-A- H0 972 784
- JP-B2- 3 618 416
- US-A1- 2005 133 692

## Beschreibung

Die Erfindung betrifft ein Verfahren zum Erzeugen eines mindestens zweidimensionalen Bildes zumindest eines Teils einer Probe, wobei mittels einer Abtasteinheit (engl. "scanner") die Probe abgetastet und für unterschiedliche Bereiche der Probe jeweils mindestens ein Lichtsignal vorzugsweise durch ein Mikroskopobjektiv aufgenommen und in ein elektrisches Signal umgewandelt wird, wobei das elektrische Signal auf mehrere parallele Auswertekanäle, deren Signalauswertungen sich voneinander so unterscheiden, dass ihre Dynamikbereiche unterschiedlich sind, verteilt wird und in jedem Auswertekanal ein jeweiliges Ergebnissignal erzeugt wird, und ein optisches Gerät mit einem Detektionsstrahlengang, der eine Abtasteinheit und einen optoelektronischen Detektor zur Umwandlung eines Lichtsignals in ein elektrisches Signal umfasst, mehreren parallelen Auswertekanälen, deren Signalauswertungen sich unterscheiden, einer Aufteilschaltung zur Verteilung des elektrischen Signals auf die Auswertekanäle. Es kann sich bei den optischen Geräten beispielsweise um Teleskope, Mikroskope, Materialprüfungs- und andere Analysevorrichtungen handeln. Der Ursprung des Lichts ist dabei beliebig, so dass die Erfindung beispielsweise in Verbindung mit Szintillation zur Detektion von ionisierender Strahlung dienen kann. Vorzugsweise wird die Erfindung jedoch zur Detektion von Fluoreszenz verwendet.

Mikroskopische Untersuchungen mittels Fluoreszenzfarbstoffen führen in vielen Fällen zu heterogenen Konzentrationsverteilungen in den zu untersuchenden Proben. Hierbei kann es sich um gewollte Anlagerungen handeln, wie sie beispielsweise zur strukturellen Markierung in Zell- oder Gewebeproben durch direkt applizierte - beispielsweise spezifische Antikörperfärbungen - oder exprimierte Fluoreszenzfarbstoffe wie beispielsweise GFP erzeugt werden. Häufig kommen noch zusätzliche ungewollte Inhomogenitäten hinzu, beispielsweise durch Autofluoreszenz und stark fluoreszierende Gewebeeinschlüsse.

Stark heterogene Fluoreszenzverteilungen in einem mikroskopischen Bild führen wie große Helligkeitsunterschiede in konventioneller Photographie dazu, dass unter Ausnutzung des dynamischen Bereiches des Detektors in einer Einzelaufnahme nur ein Teil der Bildinformation detektiert werden kann. Um Kontrastdetails in hellen Bildbereichen (mit hohen durchschnittlichen Lichtintensitäten) auflösen zu können, darf der Detektor nicht saturiert werden. Zu diesem Zweck muss die Aufnahmezeit (auch als Belichtungszeit oder Integrationszeit bezeichnet) kurz gewählt werden. Dadurch werden jedoch dunkle Bildbereiche (mit geringen durchschnittlichen Lichtintensitäten) nur mit ungenügendem Signal-Rausch-Verhältnis S/R (engl. "signal-to-noise ratio", SNR), also kontrastarm, aufgenommen. Umgekehrt ermöglicht eine längere Belichtungszeit zwar die kontrastreiche Aufnahme dunkler Bildbereiche, führt aber zur Übersteuerung (Kontrastarmut) der hellen Bildbereiche.

Durch mehrfache Einzelbildaufnahme mit unterschiedlichen Belichtungszeiten lassen sich sowohl dunkle als auch helle Bildbereiche mit gutem S/R-Verhältnis separat messen. Sie können dann zu einem Gesamtbild mit erweiterter Dynamik, in dem sowohl Hell- als auch Dunkelbereiche mit hohem Kontrast wiedergegeben werden, verrechnet werden (engl. "High Dynamic Range Imaging"; HDRI; A. Bell et al.: "High Dynamic Range Images as a Basis for Detection of Argyrophilic Nucleolar Organizer Regions Under Varying Stain Intensities", Proceedings of IEEE International Conference on Image Processing, ICIP 2006, 2541-2544). Anstatt unterschiedlicher Belichtungszeiten können im Falle der Fluoreszenz unterschiedliche Anregungsintensitäten verwendet werden.

Aus der Patentanmeldung DE 10 2006 030 530 A1 (US 2008/008479 A1) ist es bekannt, in einem Laser-Scanning-Mikroskop (LSM) ein Detektormodul einzusetzen, in dem ein Lichtsignal auf einen einzelnen optoelektronischen Wandler trifft, wo es in ein elektrisches Signal umgewandelt wird, das anschließend auf mehrere parallele Auswertekanäle aufgeteilt wird. In jedem Auswertekanal wird eine Signalauswertung durchgeführt, die von den Signalauswertungen für die anderen Auswertekanäle verschieden ist, und ein jeweiliges Ergebnissignal erzeugt. Von den Ergebnissignalen werden anhand eines vorgegebenen, variabel einstellbaren Auswahlkriteriums eines oder mehrere zur Weiterverarbeitung ausgewählt und ausgegeben. So können mehrere Einzelbilder mit unterschiedlichen Aufnahmeverfahren durch einfaches Umschalten des zur Bilderzeugung verwendeten Auswertekanals aufgenommen werden.

Die sequentielle Aufnahme mehrerer Einzelbilder ist jedoch aufwendig und langsam. Insbesondere bei der Beobachtung von Fluoreszenz ist sie problematisch, da sich durch Ausbleichen der Fluorophore die Fluoreszenzintensität zwischen den Aufnahmen verändert. Speziell bei lebenden Proben führt die mehrmalige Aufnahme zu einer hohen Strahlenbelastung, besonders bei abtastenden (engl. "scanning") Verfahren wie der Laser-Scanning-Mikroskopie. Zudem ist die sequentielle Aufnahme nicht zur Beobachtung dynamischer Abläufe geeignet.

In DE 102 53 108 A1 wird ein Gerät beschrieben, das eine elektrische Signalaufteilung auf zwei Auswertekanäle mittels einer Hochpass/Tiefpass-Kombination realisiert. Hier wird jedem Detektionskanal nur ein Teil der Detektorinformation (also des elektrischen Signals) zur Verfügung gestellt. Dies kann die möglichen Auswertemethoden einschränken oder zu erhöhtem Aufwand zur Fehlererkennung/-reduzierung führen. Beispielsweise ist der mittlere Gleichanteil von der Zählfrequenz im Hochpasszweig abhängig. Daneben erschwert die zur Entwicklungszeit notwendige Festlegung der Grenzfrequenzen der Hochpass/Tiefpass-Kombination die Anpassung an neue Applikationen oder Detektionsverfahren während der Lebenszeit des Geräts. Die Hochpass/Tiefpass-Kombination führt zudem zu nichtlinearen Amplituden und Phasenverzerrungen, die sich insbesondere bei Frequenzraum-Verfahren (engl. "frequency domain") nachteilig auswirken können.

Ein weiteres Verfahren ist aus der Druckschrift JP09072784 bekannt.

Alternativ zur sequentiellen Aufnahme von Einzelbildern ist beispielsweise aus EP 1 761 071 A1 die simultane Aufnahme von Einzelbildern unterschiedlichen Kontrastumfangs mittels asymmetrischer optischer Strahlteilung bekannt. Dies erfordert jedoch zwangsläufig eine Aufteilung des Lichtsignals auf mehrere Kanäle und mehrere optoelektronische Detektoren, die zusätzliche Rauschquellen darstellen. Durch die wegen der Aufteilung geringere Signalstärke in den Einzelkanälen wird das SNR weiter reduziert.

Der Erfindung liegt die Aufgabe zugrunde, ein Verfahren der eingangs genannten Art anzugeben, die es ermöglichen, mit geringem Aufwand in kurzer Zeit Bilder mit erweitertem Dynamikumfang zu erzeugen.

Die Aufgabe wird gelöst durch ein Verfahren, welches die in Anspruch 1 angegebenen Merkmale aufweist.

Vorteilhafte Ausgestaltungen der Erfindung sind in den Unteransprüchen angegeben. Erfindungsgemäß ist vorgesehen, dass zum Erzeugen des Bildes für den betreffenden Probenbereich mindestens eines der Ergebnissignale in Abhängigkeit eines der Ergebnissignale und/oder in Abhängigkeit eines Zwischenergebnissignals eines Auswertekanals ausgewählt wird. Es werden also beim Erzeugen des Bildes für verschiedene Bildelemente unterschiedliche Auswertekanäle ausgewählt und zur Erzeugung des Intensitätswertes des betreffenden Bildelements verwendet. Werden mehrere Ergebnissignale ausgewählt, werden diese vorzugsweise zu genau einem stellvertretenden Ergebnissignal addiert.

Jeder Probenbereich, für den eine Auswahl durchgeführt wird, entspricht vorzugsweise einem jeweiligen Bildelement (engl. "picture element"; Pixel) des zu erzeugenden Bildes. Zweckmäßigerweise sind hierbei alle Probenbereiche (und im Fall der Visualisierung die Bildelemente) kongruent.

Ein Zwischenergebnissignal ist im Sinne der Erfindung ein Signal, das von einem Auswertekanal zeitlich vor Ausgabe des Ergebnissignals bereitgestellt wird, beispielsweise im Rahmen einer sogenannten Subpixelanalyse (engl. "sub-pixel analysis"; SPA), also der Auswertung von zeitlich echten Untereinheiten des elektrischen Signals. Insbesondere kann es sich bei den Zwischenergebnissignalen gerade um solche zeitlich echten Untereinheiten des elektrischen Signals oder davon abgeleitete Größen handeln.

Vorteilhafterweise wird für die Auswahl mindestens eines (bis hin zu allen) der Ergebnissignale und/oder mindestens eines (bis hin zu allen) der Zwischenergebnissignale bewertet. Bei der Bewertung wird vorzugsweise ein Grad einer Eignung des betreffenden Ergebnissignals/Zwischenergebnissignals zur Erzeugung eines Bildes mit erweitertem Dynamikumfang ermittelt. Dadurch kann ein dynamikerweitertes Bild mit größtmöglichem Dynamikumfang ermittelt werden.

Die bereichsindividuelle (vorzugsweise pixelindividuelle) Auswahl aus den verschiedenen Signalauswertungen anhand eines oder mehrerer Ergebnissignale ermöglicht es, für unterschiedliche Bildelemente jeweils die Signalauswertung mit dem für die betreffenden Probenbereich optimalen Dynamikumfang zu verwenden. Das resultierende Bild erhält dadurch einen erweiterten Dynamikumfang, der sich aus der Vereinigungsmenge der (engeren) Dynamikumfänge der einzelnen Bildelemente ergibt. Das Gesamtrauschen in dem zu erzeugenden Bild kann also durch pixelweise Rauschminimierung auf das Rauschen des jeweils rauschärmsten Aufnahme-/Auswerteverfahrens reduziert werden. Auf eine zeitaufwendige sequentielle Aufnahme mehrerer Einzelbilder kann verzichtet werden. Es wird nur ein einzelner optoelektronischer Detektor benötigt, dessen gesamter Dynamikumfang ausgenutzt werden kann.

Zweckmäßigerweise kann die Auswahl während des Abtastens (engl. "scanning") erfolgen, insbesondere in Echtzeit. Dadurch kann beispielsweise ein Detektormodul, in dem die Auswertekanäle samt einer Auswerteeinheit angeordnet sind, die Auswahl autark durchführen und nur das ausgewählte Ergebnissignal beziehungsweise die Summe der ausgewählten Gruppe von Ergebnissignalen an einen übergeordneten Steuerrechner weitergeben. Dadurch wird nur eine Übertragungsbandbreite für einen einzigen Auswertekanal benötigt.

Vorzugsweise wird zur Erzeugung des Bildes mit einem Dynamikumfang, der einer Vereinigung der Dynamikumfänge mehrerer Auswertekanäle entspricht, genau ein Abtastdurchgang durchgeführt. Dies erlaubt einen hohen Kontrastumfang des zu erzeugenden Bildes bei maximaler Probenschonung.

Mit besonders geringem Aufwand gelingt die Auswahl, in dem vorteilhafterweise für jeden Probenbereich die Auswahl des Ergebnissignals anhand eines jeweiligen Ergebnissignals, das eine Photonenanzahl angibt, und/oder anhand eines jeweiligen Zwischenergebnissignals, das eine Photonenanzahl angibt, erfolgt. Es braucht lediglich ein Vergleich mit einer oder mehreren vorgegebenen Schwellwerten durchgeführt zu werden, um genau einen Auswertekanal oder eine Gruppe von Auswertekanälen, deren Ergebnissignale addiert werden, auszuwählen.

In einer weitergehenden Ausgestaltung kann die Auswahl ausschließlich in Abhängigkeit eines oder mehrerer der Ergebnissignale und/oder eines oder mehrerer der Zwischenergebnissignale erfolgen. Dies vereinfacht und beschleunigt die Auswahl.

Gemäß einer bevorzugten Ausführungsform wird für jeden Probenbereich für jedes Ergebnissignal jeweils ein Signal-Rausch-Verhältnis ermittelt und dasjenige der Ergebnissignale ausgewählt und ausgegeben, welches das geringste Signal-Rausch-Verhältnis aufweist. Auf diese Weise kann mit geringem Aufwand das hinsichtlich des gesamten Kontrastumfangs bestmögliche Bild erzeugt werden.

Die Erfindung sieht vor, dass in Abhängigkeit eines Zwischenergebnissignals eine Verstärkung (engl. "gain") des Detektors oder eine Anregungslichtintensität einer Lichtquelle eingestellt wird. Dadurch kann eine Übersteuerung der Detektion vermieden werden. Die Verstärkung des Detektors kann im Falle eines Photovervielfachers (engl. "photomultiplier"; PMT) beispielsweise durch ein Wegschalten einer oder mehrerer Dynoden oder durch eine Veränderung der Dynodenhochspannung eingestellt werden.

Zusammengefasst erlaubt die Erfindung es, mittels spezieller elektronischer Datenaufnahme (insbesondere unter Verwendung einer Vorrichtung gemäß DE 10 2006 030 530 A1) und Auswertung in einem einzigen Abtastdurchgang ein Bild mit (bei vorgegebenen Anregungslichtbedingungen und vorgegebener Abtastgeschwindigkeit, also vorgegebener Pixelintegrationszeit) bislang unerreichtem Signal-Rausch-Verhältnis S/R über den gesamten dynamischen Bereich eines Photodetektors zu erzeugen. Die Erfindung ist jedoch nicht auf Ausführungsformen mit nur genau einem Abtastdurchgang beschränkt.

Erfindungsgemäß erzeugte Bilder mit erweitertem Dynamikumfang können insbesondere in herkömmlichen Verfahren zur Erweiterung des Dynamikumfangs weiterverarbeitet werden, um einen noch größeren Dynamikumfang zu erreichen. Auf diese Weise können beispielsweise dynamikerweiterte Bilder unterschiedlicher Detektorarten, die disjunkte Dynamikumfänge aufweisen, kombiniert werden.

Auch kann eine Serie von Bildern mit erfindungsgemäß erweiterter Dynamik mit unterschiedlichen Integrationszeiten oder Anregungslichtintensitäten aufgenommen und zu einem HDR-Bild verrechnet werden. Beispielsweise kann in einer solchen Ausführungsform statt einer pixelweisen Auswahl des Auswertekanals die Kanalauswahl auch für gesamte Einzelbilder stattfinden, die anschließend pixelweise zu einem dynamikerweiterten Bild verrechnet werden. Es werden dann beispielsweise Einzelbilder mit kurzen Integrationszeiten vollständig in einem Auswertekanal mit Einzelphotonenzählung (engl. "single photon counting"; SPC) verarbeitet und Einzelbilder mit längeren Integrationszeiten in einem Überabtastungskanal. In einer alternativen Ausführungsform können zur Dynamikerweiterung sowohl die Anregungsintensität als auch die Belichtungszeit gleichzeitig oder sequentiell modifiziert werden. Zu diesem Zweck können die einzelnen Pixel hinsichtlich ihrer Signalqualität bewertet werden. Hat beispielsweise eine Messung mit sehr langer Integrationszeit in einem Pixel kein gutes Signal erzeugt, so kann eine zusätzliche Messung mit höherer Laserintensität ein besseres Signal erzeugen und somit zur Erweiterung des dynamischen Bereiches beitragen. Nachfolgend wird die Erfindung anhand von Ausführungsbeispielen näher erläutert. In den Zeichnungen zeigen:
Fig. 1 ein Schema eines Laser-Scanning-Mikroskops zur Durchführung des erfindungsgemäßen Verfahrens,
Fig. 2 eine schematische Darstellung der simultanen Signalauswertung in zwei Auswertekanälen mit unterschiedlichen Signalauswertungen,
Fig. 3 beispielhafte Dynamikumfänge einzelner Auswerteverfahren,
Fig. 4 das Prinzip der bereichsweisen/pixelweisen Signaloptimierung zur Erweiterung des Dynamikumfangs des zu erzeugenden Bildes anhand eines erzeugten Bildes,
Fig. 5 eine schematische Darstellung der simultanen Signalauswertung in fünf Auswertekanälen mit unterschiedlichen Signalauswertungen und
Fig. 6 ein Schema einer Subpixelanalyse.

In allen Zeichnungen tragen übereinstimmende Teile gleiche Bezugszeichen.

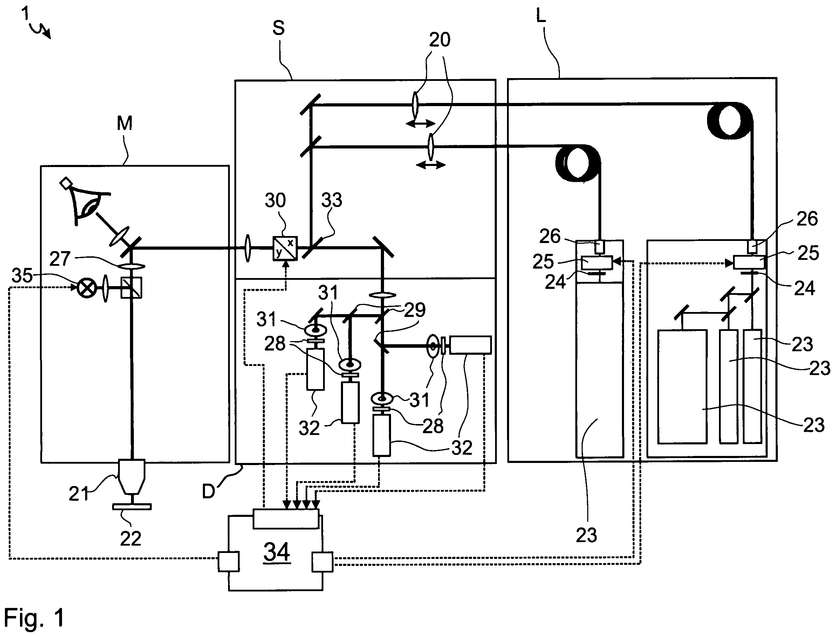

In Fig. 1 ist ein Laser-Scanning-Mikroskop 1, dessen Steuereinheit 34 zur Durchführung des erfindungsgemäßen Verfahrens eingerichtet ist, schematisch dargestellt. Das LSM 1 ist modular aus einem Beleuchtungsmodul L mit Lasern 23, einem Abtastmodul S (engl. "scanning module"), einem Detektionsmodul D und der Mikroskopeinheit M mit dem Mikroskopobjektiv 21 zusammengesetzt.

Das Licht der Laser 23 kann durch Lichtklappen 24 und Abschwächer 25, beispielsweise ein akustooptischer einstellbarer Filter (engl. "acousto-optic tunable filter"; AOTF), von der Steuereinheit 34 beeinflusst werden, bevor es über Lichtleitfasern und Koppeloptiken 20 in die Abtasteinheit S eingespeist und vereinigt wird. Über den Hauptstrahlteiler 33 und die X-Y-Abtasteinheit 30 (engl. "scanner"), die zwei Galvanometerspiegel aufweist (nicht dargestellt), gelangt es durch das Mikroskopobjektiv 21 zur Probe 22, wo es ein Fokusvolumen (nicht abgebildet) beleuchtet. Neben den Lasern 23 kann eine Lichtquelle 35 zur Weitfeldbeleuchtung (unabhängig von der Einstellung der Abtasteinheit 30) verwendet werden.

Von der Probe reflektiertes Licht oder emittiertes Fluoreszenzlicht gelangt durch das Mikroskopobjektiv 21 und weiter über die Abtasteinheit 30 durch den Hauptstrahlteiler 33 in das Detektionsmodul D. Der Hauptstrahlteiler 33 kann beispielsweise als dichroitischer Farbteiler ausgebildet sein. Das Detektionsmodul D weist mehrere Detektionskanäle mit jeweils einer Lochblende 31, einem Filter 28 und einem Photovervielfacher als Detektor 32 auf, die durch Farbteiler 29 separiert sind. Anstelle von Lochblenden 31 können, beispielsweise bei linienförmiger Beleuchtung, auch Schlitzblenden (nicht abgebildet) verwendet werden. Die konfokalen Lochblenden 31 dienen der Diskriminierung von Probenlicht, das nicht aus dem Fokusvolumen stammt. Die Detektoren 32 detektieren daher ausschließlich Licht aus dem Fokusvolumen. Alternativ oder zusätzlich zu PMT können andere Detektortypen, beispielsweise Lawinenphotodioden (engl. "avalanche photodiode"; APD), oder ortsauflösende Systeme wie CCD-Kameras verwendet werden. Eine Ortsauflösung ist insbesondere in Verbindung mit spektraler Aufspaltung und/oder einem linienförmigen Fokusvolumen notwendig. Die Detektoren 32 umfassen in diesem Beispiel eine jeweilige Auswerteelektronik (hier nicht näher dargestellt). In anderen Ausführungsformen (nicht dargestellt) kann die Auswerteelektronik von den Detektoren 32 abgesetzt sein, insbesondere kann sie außerhalb des Detektionsmoduls D angeordnet sein.

Das konfokal beleuchtete und aufgenommene Fokusvolumen der Probe 22 kann mittels der Abtasteinheit 30 über die Probe 22 bewegt werden, um pixelweise ein Bild aufzunehmen, indem die Galvanometerspiegel der Abtasteinheit 30 gezielt verdreht werden. Sowohl die Bewegung der Galvanometerspiegel als auch das Schalten der Beleuchtung mittels der Lichtklappen 24 oder der Abschwächer 25 werden unmittelbar von der Steuereinheit 34 gesteuert. Die Datenaufnahme von den Detektoren 32 erfolgt ebenfalls durch die Steuereinheit 34. Die Auswerteeinheit/Steuereinheit 34 kann beispielsweise ein handelsüblicher elektronischer Rechner (engl. "computer") sein.

Abhängig vom verwendeten optoelektronischen Detektor sind bei der Bildaufnahme unterschiedliche Rauschcharakteristika zu berücksichtigen, beispielsweise das unvermeidbare Ausleserauschen von CCD-Kameras. Für LSM mit PMT-Detektoren sind hauptsächlich zwei Rauschquellen zu berücksichtigen: Das Photonenschrotrauschen und das Detektordunkelrauschen, wozu auch das Elektronikrauschen gezählt wird. Die Hauptquelle des Dunkelrauschens ist die thermische Emission von Elektronen von der Photokathode und den ersten Dynoden. Für die in der Mikroskopie zum Einsatz kommenden Photokathoden mit kleiner Detektionsfläche kann mittels Kühlung das thermische Rauschen so weit reduziert werden, dass es praktisch keine große Rolle mehr spielt. Das Elektronikrauschen kann auf dieser Weise nicht vermindert werden.

Bei PMT-Photodetektoren kommen in der Praxis zwei Detektionsmethoden zum Einsatz, die (digitale) Einzelphotonenzählung oder die (analoge) Integration des Anodenstroms mit anschließender Analog-Digital-Wandlung:
Bei Bandbreiten unter 100 MHz (10 ns), kann das elektrische Signal des PMT an der Anode als eine Serie von Einzelpulsen detektiert und digital verarbeitet werden. Beim Abtasten (engl. "scanning") im Rahmen einer Fluoreszenzmessung in einem LSM entstehen bei typischen Einzelpixelintegrationszeiten von 1-2 µs Zählraten von 200-1000 Fluoreszenzphotonen pro Sekunde auf dem PMT. Das erfordert die Verwendung von Signalvorverstärkern und Proportionaldiskriminatoren (engl. "constant fraction discriminator"; CFD). Die Amplitude der Einzelphotonenpulse von PMT variiert wegen Zufallsschwankungen der Detektorverstärkung von Puls zu Puls, weil aus der Photokathode für jedes auftreffende Photon eine andere Anzahl von Elektronen ausgeschlagen wird. Die Einzelphotonenzählung hat den Vorteil, dass sich mittels eines Diskriminator-Schwellwertes noch vorhandenes Elektronikrauschen von dem elektrischen Signal trennen lässt, wodurch das S/R-Verhältnis und der Kontrast erhöht werden. Die analoge Amplitudenverteilung wird in eine Delta-Funktion bei Amplitude Eins überführt - mit anderen Worten in eine binäre Darstellung. Die Einzelphotonenzählung wird normalerweise als Detektionsmethode der Wahl für niedrige Lichtintensitäten betrachtet.

Mit zunehmenden Lichtintensitäten werden die Intervalle zwischen den auf den PMT auftreffenden Photonen so kurz, dass die Einzelphotonenpulse (typische Pulsbreite 2 ns) einander überlappen und eine kontinuierliche Signalform erzeugen. Dieser kontinuierliche Anodenstrom kann mittels konventionellen Analog-Digital-Wandlern verarbeitet werden. Durch die Kombination dieser beiden Detektionsmethoden kann der gesamte dynamische Bereich eines PMT ausgenutzt werden.

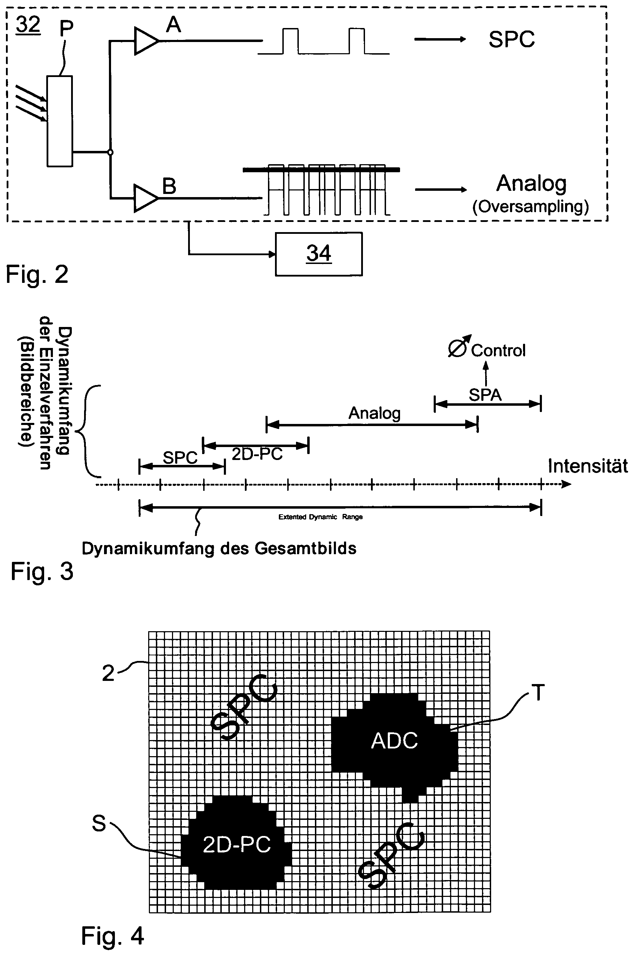

**Fig. 2** zeigt eine beispielhafte Ausführungsform der Auswerteelektronik der Detektoren 32 im Detail. Das von der Anode des PMT P (allgemein: von dem photoempfindlichen optoelektronischen Wandler P) abgegebene elektrische Signal wird aufgeteilt und auf zwei parallele Auswertekanäle A/B verteilt. Die parallelen Auswertekanäle A, B weisen dabei einen unterschiedlichen Dynamikumfang auf, beispielsweise erfolgt in Auswertekanal A eine Photonenzählung und in Auswertekanal B eine Überabtastung (engl. "oversampling") mit Analog-Digital-Wandlung (ADC) als Analogdetektion. Beide Auswertekanäle A, B erzeugen ein jeweiliges Ergebnissignal. Die Ergebnissignale werden beispielsweise an die Steuereinheit 34 zur weiteren Verarbeitung (Auswahl zur Erzeugung eines dynamikerweiterten Bildes) ausgegeben. Alternativ kann die erfindungsgemäße Auswahl in der Auswerteelektronik der Detektoren 32 erfolgen, so dass zu jedem Zeitpunkt nur genau eines der Ergebnissignale (oder genau eine Summe mehrerer Ergebnissignale) an die Steuereinheit 34 ausgegeben wird.

In **Fig. 3** sind die Dynamikumfänge verschiedener Auswerteverfahren schematisch dargestellt. Durch die bereichsweise Auswahl des/der optimalen Auswerteverfahren kann für das zu erzeugende Gesamtbild die Vereinigung dieser Wertebereiche erreicht werden. Dies ist um unteren Bereich als Gesamtdynamik eines erfindungsgemäß erzeugten Bildes angedeutet.

Das von der Erfindung zur Erzeugung von Bildern mit erweiterter Dynamik genutzte Prinzip ist in **Fig. 4** verdeutlicht. Es beruht zum einen auf der Reduzierung des Gesamtrauschens im erzeugten Bild 2 durch lokale (bereichsweise; vorzugsweise pixelweise) Minimierung des Gesamtrauschens auf das Rauschen des jeweils rauschärmsten Aufnahme-/Auswerteverfahrens (Vereinigung der Dynamikumfänge unterschiedlicher simultan arbeitender Auswertekanäle) und zum anderen auf der Vermeidung der Übersteuerung der Detektionselektronik mit und ohne Einflussnahme auf Detektor und Beleuchtung. Beides gelingt durch Auswahl des für den betreffenden Probenbereich (Bildbereich; vorzugsweise Einzelpixel) optimalen Auswerteverfahrens anhand der in den verschiedenen Auswertekanälen parallel ermittelten Ergebnissignale. Zu diesem Zweck werden die Ergebnissignale aller Auswertekanäle vorzugsweise simultan ermittelt und anschließend beispielsweise hinsichtlich ihrer Eignung für die Erzeugung eines dynamikerweiterten Bildes bewertet. In Abhängigkeit dieser Bewertung erfolgt die Auswahl genau eines Ergebnissignals als Intensitätswert für den betreffenden Probenbereich (beispielsweise einen Pixel). Es ist auch möglich, aufgrund der Bewertung die Ergebnissignale mehrerer Auswertekanäle als geeignet auszuwählen und diese zu genau einem Ergebnissignal zu summieren, das als Intensität für den betreffenden Bildbereich weiterverwendet und vorzugsweise ausgegeben wird.

Auf diese Weise kann der höhere Kontrast, der bei lichtschwachen Messungen mittels Einzelphotonenzählung gewonnen wird, zur Erweiterung des unteren dynamischen Bereiches gegenüber der analogen Betriebsart genutzt werden, welche aber wiederum erst eine vollständige Ausnutzung des großen dynamischen Bereiches des PMT möglich macht. Beispielsweise wird anhand der Ergebnissignale die Photonenzählrate, die im kürzestmöglich messbaren Zeitintervall vorliegt, als Bewertungsgröße ermittelt. Anhand dieser kann dann eine Entscheidung gefällt werden, welcher Kanal (oder welche Kanalgruppensumme) zur Ermittlung der Intensität des jeweiligen Pixels verwendet werden soll. Bei lichtschwachen Pixeln wird entsprechend der Kanal mit Einzelphotonenzählung verwendet. Bei höheren Photonenzählraten wird der analoge Kanal verwendet.

Im abgebildeten Fall standen drei parallele Auswertekanäle zur Verfügung: Einzelphotonenzählung SPC, zweidimensionaler Photonenzählung (2D-PC) und Überabtastung ADC. Im Bildbereich S lag eine mittlere Fluoreszenzintensität vor, im Bildbereich T eine hohe. Nach einer pixelweisen Bewertung der Ergebnissignale wurden beispielsweise die Intensitäten der Pixel des Bildbereichs S ausschließlich mittels zweidimensionaler Photonenzählung und die Intensitäten der Pixel des Bildbereichs T ausschließlich mittels Überabtastung ermittelt, während die Intensitäten der Pixel des Restes R des Bilds 2 (also zwischen den Bildbereichen S und T und um diese herum) aufgrund der dort niedrigen Fluoreszenzintensität mit Einzelphotonenzählung ermittelt wurden.

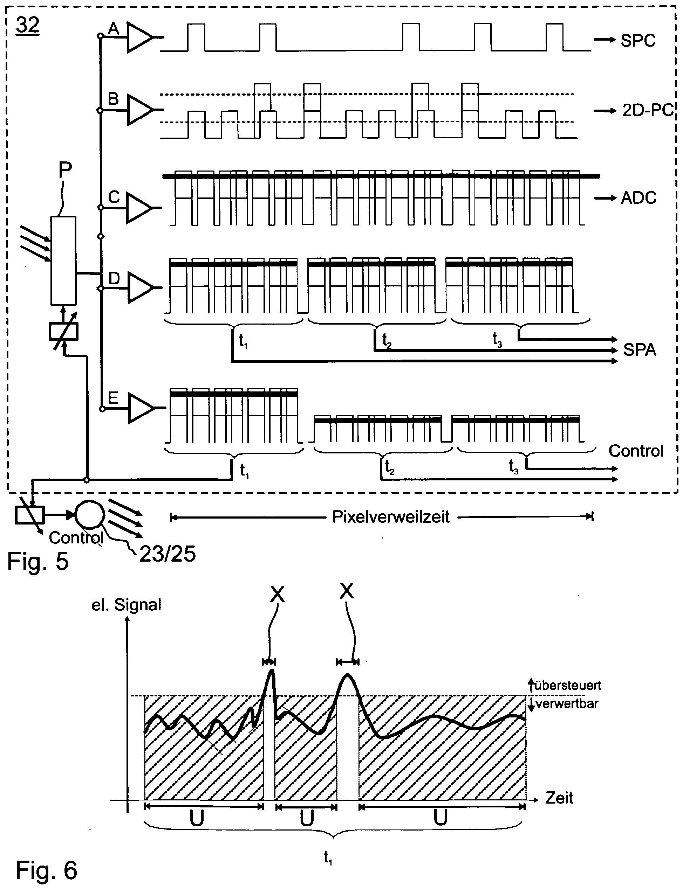

In **Fig. 5** wird ein beispielhafter zeitlicher Signalverlauf dargestellt, der zur Erzeugung eines Einzelpixels aufgenommen wird. Die Intensität des Einzelpixels wird während der Abtastung (engl. "scanning") beispielweise in einer typische Pixelverweilzeit von 1,2 µs als Pixelintegrationszeit. Das vom Photoempfänger P, beispielsweise einem PMT, abgegebene Signal wird in dieser Ausführungsform in fünf verstärkte Einzelsignale aufgeteilt und in den Kanälen A-E verarbeitet. Kanal A ist mit Elektronik für Einzelphotonenzählung ausgestattet (Hardware: CFD), siehe beispielsweise DE 2006 030 530 A1. Kanal B ist für Einphotonenzählung gekoppelt mit Mehrfachschwellwertanalyse, auch als zweidimensionale Photonenzählung bezeichnet, ausgestattet. Zur Offenbarung der 2D-PC wird auf DE 101 10 925 A1 verwiesen. Kanal C betreibt analoge Detektion (Überabtastung; Hardware: Analog-Digital-Wandler, Kondensatoren), siehe beispielsweise DE 2006 030 530 A1. Kanal D liest in einer Subpixelanalyse (SPA) das Gesamtsignal in der Pixelintegrationszeit in mehreren Teilbereichen (drei Bereiche je 400 ns dargestellt) aus. Kanal E reguliert bei zu hoher Photonenzählrate im kleinstmöglichen zeitlichen Auslesebereich entweder die Detektorverstärkung oder entsprechend die Anregungslichtintensität der Anregungslichtquelle 23 (oder 25) herab ("Control"). Für das/den Einzelpixel wird das als Bildintensität ausgegebene Signal entsprechend der anhand der Ergebnissignale ausgewählten Analysemethode aus einem oder einer Summe mehrerer der Kanäle A bis D erzeugt.

Beispielsweise kann für die Auswahl jegliche Art der statistischen Analyse an den Ergebnis- oder Zwischenergebnissignalen vorgenommen werden kann, um die bestmögliche Verarbeitungsmethode zu bestimmen (Bewertung, insbesondere durch pixelweise Ermittlung des jeweiligen Grads der Eignung der Auswertekanäle für ein dynamikerweitertes Bild) und/oder um zusätzliche Informationen aus den Daten zu extrahieren. Im einfachsten Falle wird die Analyse nur aus der Bestimmung der Photonenzählrate im jeweiligen Pixel bestehen und eine entsprechende Auswertungskanalauswahl (und Zuordnung zum Pixel, also Ausgabe des betreffenden Ergebnissignals als Intensitätswert) erfolgen: Bei niedrigen Photonenzählraten in einem Pixel (Photonenzählrate unterhalb eines ersten Schwellwerts) kommt Kanal A zum Einsatz. Bei erhöhten Photonenzählraten (typisch 1 Million Photonen/sec) zwischen dem ersten Schwellwert und einem zweiten Schwellwert wird Kanal B hinzugeschaltet (Summierung von A und B). Für hohe Photonenzählraten oberhalb des zweiten Schwellwerts wird nur Kanal C benötigt, wodurch der gesamte obere Detektordynamikbereich ausgenutzt werden kann. Kommt es zur Saturierung im Einzelpixelwert, kann die Detektorlinearität eventuell immer noch gewährleistet werden, wenn statt der Aufsummierung der Subpixel-Zwischenergebnissignale in den Zeitfenstern t₁-t₃ in Kanal D beispielsweise nur das Zwischenergebnissignal des Fensters t₁ als Ergebnissignal ausgegeben wird (vorausgesetzt, dass in diesem Bereich noch keine vollständige Übersteuerung vorliegt).

Neben der Auswahl eines oder mehrerer Auswertekanäle kann die Steuereinheit 34, wenn sie eine Übersteuerung der Photonenzählrate identifiziert, die Detektorverstärkung und/oder die Anregungslichtintensität herunterregeln, um den Bildkontrast zu verbessern. Die Anregungslichtintensität kann beispielsweise mittels des Abschwächers 25 in einer zeitlichen Größenordnung von 1 µs reguliert werden. Bei Diodenlasern kann sie direkt durch den Diodenstrom gesteuert werden. Zur Anpassung des Detektorverstärkungsfaktors kann ein Wegschalten von Dynoden oder eine Veränderung (Nachführung) der Dynodenhochspannung erfolgen. Die Detektorverstärkung kann mittels schneller Umschaltung in einem Zeitbereich von weniger als 1 µs zwischen Anode und einer anderen Dynode reduziert werden (siehe Hamamatsu PMT Handbook, S. 98: "Anode sensitivity adjustment circuits", Veröffentlichungsdatum unbekannt). Die Anpassung der Detektorverstärkung ist im Grundsatz aus DE 10 2007 004 598 A1 bekannt, jedoch nur als Schutzschaltung für einen PMT, nicht zur Verhinderung der Übersteuerung. Während des Abtastvorganges muss die Nachregelung der Dynodenhochspannung im Zeitbereich von Mikrosekunden und weniger erfolgen, um pixelgenau einstellbar zu sein. Sofern zumindest eine Reaktionszeit von Mikrosekunden erreicht wird, kann zumindest ein Abschalten des PMT durch starke Übersteuerung verhindert werden und durch Kombination mit einer zweiten Bildaufnahme, für welche pixelweise die Hochspannungsumschaltpunkte zuvor berechnet werden, könnte eine korrekte Bildaufnahme erfolgen.

Die Auswerteelektronik (Auswertekanäle A-E) ist nur beispielhaft als Teil des Detektors 32 abgebildet. Sie kann alternativ teilweise oder vollständig außerhalb des Detektors 32 angeordnet sein. Dasselbe gilt für die Steuer- oder Regelelektronik des PMT P (allgemein: des optoelektronischen Wandlers P).

Die Regulierung der Anregungslichtquelle 23/25 in Abhängigkeit der Zwischenergebnissignale oder Ergebnissignale des Kanals E kann von einem zum Detektor 32 gehörigen Steuer- oder Regelkreis oder von der Steuereinheit 34 oder (wie abgebildet) von einer zusätzlichen, von dem Detektor 32 abgesetzten Hilfssteuereinheit durchgeführt werden.

Bei teilweiser Übersteuerung auch in den Subpixelzeitintervallen eines SPA-Auswertekanals kann mit den ausgelesenen nicht übersteuerten Werten zumindest noch ein bedeutungsvoller Mittelwert berechnet werden. **Fig. 6** zeigt diese Variante der Subpixelanalyse beispielhaft für das Zeitfenster t₁ des Signalverlaufs von Kanal D in Fig. 5. Im Zeitfenster t₁ wird das elektrische Signal des Photodetektors 32 durch die übersteuerten Abschnitte X in drei verwertbare Abschnitte U (schraffiert) unterteilt. Für das Zwischenergebnissignal des Zeitfensters t₁ wird das elektrische Signal über diese drei Abschnitte U integriert und ein Mittelwert über die Integrationsdauer gebildet. Es wird dann regulär zur Bildung des Ergebnissignals des Kanals D verwendet und kann so in die Auswahl des geeignetsten Auswertekanals einfließen.

Eine zusätzliche Erweiterung des dynamischen Bereiches kann durch Kombination verschiedener Detektoren unterschiedlicher Empfindlichkeiten und dynamischer Bereiche erreicht werden. Allerdings birgt sie auch Nachteile wie höhere Komponentenkosten und optische Integration und Ausrichtung. Auch durch mehrere optoelektronische Detektoren identischer Bauart kann der Dynamikumfang erweitert werden, beispielsweise durch einen Multikanal-Detektor, dessen Kanäle unterschiedlichen Detektionswellenlängen und/oder Probenausschnitten zugeordnet sein können.

Falls gleichzeitiges Auslesen mehrerer Detektionskanäle nicht möglich sein sollte, so kann zunächst ein Bild in einem analogen Kanal (Überabtastung) aufgenommen werden. Anschließend werden die Bereiche niedriger Bildintensität selektiert und nur diese Bereiche mit einem digitalen Auswerteverfahren (SPC, 2D-PC) erneut abgetastet (engl. "scanned") und aufgenommen. Dies erfordert allerdings mehr als einen Abtastdurchgang und bedeutet somit eine erhöhte Probenbelastung.

### Bezugszeichenliste

- 1: Mikroskop
- 2: Mikroskopbild mit erweitertem Dynamikumfang
- 20: Kollimationsoptik
- 21: Mikroskopobjektiv
- 22: Probe
- 23: Laser
- 24: Lichtklappe
- 25: Abschwächer
- 26: Faserkoppler
- 27: Tubuslinse
- 28: Filter
- 29: Dichroitischer Strahlteiler
- 30: Abtasteinheit
- 31: Lochblende
- 32: Photovervielfacher
- 33: Hauptstrahlteiler
- 34: Steuereinheit
- 35: Lichtquelle

- D: Detektionsmodul
- L: Beleuchtungsmodul
- M: Mikroskop
- S: Abtastmodul
- P: Optoelektronischer Wandler
- R_{1,2,3}: Probenregion

## Patentansprüche

1. Verfahren zum Erzeugen eines mindestens zweidimensionalen Bildes (2) zumindest eines Teils einer Probe (22), wobei mittels einer Abtasteinheit (30) die Probe (22) abgetastet und für unterschiedliche Bereiche der Probe (22) jeweils mindestens ein Lichtsignal mittels eines optoelektronischen Detektors (32) aufgenommen und in ein elektrisches Signal umgewandelt wird, wobei das elektrische Signal auf mehrere parallele Auswertekanäle (A-E), deren Signalauswertungen sich voneinander so unterscheiden, dass ihre Dynamikbereiche unterschiedlich sind, verteilt wird und in jedem Auswertekanal (A-E) ein jeweiliges Ergebnissignal erzeugt wird, **dadurch gekennzeichnet, dass** zum Erzeugen des Bildes (2) für den betreffenden Probenbereich mindestens eines der Ergebnissignale in Abhängigkeit eines der erzeugten Ergebnissignale des betreffenden Probenbereichs und/oder in Abhängigkeit eines Zwischenergebnissignals eines Auswertekanals (A-E) ausgewählt wird, wobei jeder Probenbereich, für den eine Auswahl durchgeführt wird, einem jeweiligen Bildelement des zu erzeugenden Bildes (2) entspricht, und beim Erzeugen des Bildes (2) für verschiedene Bildelemente unterschiedliche Auswertekanäle ausgewählt und zur Erzeugung eines Intensitätswertes des betreffenden Bildelements verwendet werden,
wobei ein Zwischenergebnissignal ein von einem der Auswertekanäle zeitlich vor der Ausgabe des Ergebnissignals des Auswertekanals bereitgestelltes Signal ist,
und die Auswahl durch Vergleich des jeweiligen Ergebnissignals und/oder Zwischenergebnissignals mit einem oder mehreren vorgegebenen Schwellwerten oder durch Ermitteln eines jeweiligen Signal-Rausch-Verhältnisses für jedes Ergebnissignal und Auswählen desjenigen Ergebnissignals, welches das geringste Signal-Rausch-Verhältnis aufweist, erfolgt und wobei in Abhängigkeit eines Zwischenergebnissignals eine Verstärkung des Detektors oder eine Anregungslichtintensität einer Lichtquelle eingestellt wird.

2. Verfahren nach Anspruch 1, wobei die Auswahl während des Abtastens erfolgt.

3. Verfahren nach Anspruch 1 oder 2, wobei für die Auswahl mindestens eines der Ergebnissignale und/oder mindestens eines der Zwischenergebnissignale ein Grad einer Eignung des betreffenden Ergebnissignals beziehungsweise Zwischenergebnissignals zur Erzeugung des Bildes mit erweitertem Dynamikumfang ermittelt wird.

4. Verfahren nach einem der vorhergehenden Ansprüche, wobei zur Erzeugung des Bildes mit einem Dynamikumfang, der einer Vereinigung der Dynamikumfänge mehrerer Auswertekanäle entspricht, genau ein Abtastdurchgang durchgeführt wird.

5. Verfahren nach einem der vorhergehenden Ansprüche, wobei für jeden Probenbereich die Auswahl des Ergebnissignals anhand eines jeweiligen Ergebnissignals, das eine Photonenanzahl angibt, und/oder anhand eines jeweiligen Zwischenergebnissignals, das eine Photonenanzahl angibt, erfolgt, indem ein Vergleich der angegebenen Photonenanzahl mit einem vorgegebenen Schwellwert erfolgt.

## Claims

1. Method for producing an at least two-dimensional image (2) of at least one part of a sample (22), wherein, using a scanning unit (30), the sample (22) is scanned and in each case at least one light signal is recorded for different regions of the sample (22) using an optoelectronic detector (32) and converted into an electrical signal, wherein the electrical signal is distributed to a plurality of parallel evaluation channels (A-E), the signal evaluations of which differ from one another such that the dynamic ranges thereof differ, and a respective result signal is produced in each evaluation channel (A-E), wherein for producing the image (2) for the relevant sample region at least one of the result signals is selected in dependence on one of the produced result signals of the relevant sample region and/or in dependence on an intermediate result signal of an evaluation channel (A-E), wherein each sample region for which a selection is made corresponds to a respective image element of the image (2) to be produced, and when producing the image (2) different evaluation channels are selected for different image elements and used for producing an intensity value of the relevant image element, wherein an intermediate result signal is a signal that is provided by one of the evaluation channels temporally before the output of the result signal of the evaluation channel, and the selection is made by comparing the respective result signal and/or intermediate result signal to one or more specified threshold values or by ascertaining a respective signal-to-noise ratio for each result signal and selecting the result signal that has the lowest signal-to-noise ratio, **characterized in that** an amplification of the detector or an excitation light intensity of a light source is set in dependence on an intermediate result signal.

2. Method according to Claim 1, wherein the selection is made during scanning.

3. Method according to Claim 1 or 2, wherein for the selection of at least one of the result signals and/or at least one of the intermediate result signals, a degree of suitability of the relevant result signal or intermediate result signal is ascertained for producing the image with an expanded dynamic range.

4. Method according to one of the preceding claims, wherein exactly one scanning operation is performed for producing the image having a dynamic range that corresponds to a combination of the dynamic ranges of a plurality of evaluation channels.

5. Method according to one of the preceding claims, wherein for each sample region the selection of the result signal is effected on the basis of a respective result signal that indicates a number of photons and/or on the basis of a respective intermediate result signal that indicates a number of photons by comparing the indicated number of photons to a specified threshold value.

## Revendications

1. Procédé pour générer une image au moins bidimensionnelle (2) d'au moins une partie d'un échantillon (22), dans lequel on balaie l'échantillon (22) au moyen d'une unité de balayage (30) et on enregistre pour différentes zones de l'échantillon (22) chaque fois au moins un signal lumineux au moyen d'un détecteur optoélectronique (32) et on le convertit en un signal électrique, dans lequel on répartit le signal électrique sur plusieurs canaux d'évaluation parallèles (A-E), dont les évaluations de signal se différencient les unes des autres de telle manière que leurs zones dynamiques soient différentes et qu'un signal de résultat respectif soit généré dans chaque canal d'évaluation (A-E), dans lequel pour la génération de l'image (2) on sélectionne pour la zone d'échantillon concernée au moins un des signaux de résultat en fonction d'un des signaux de résultat généré de la zone d'échantillon concernée et/ou en fonction d'un signal de résultat intermédiaire d'un canal d'évaluation (A-E), dans lequel chaque zone d'échantillon, pour laquelle on effectue une sélection, correspond à un élément d'image respectif de l'image à générer (2), et lors de la génération de l'image (2) on sélectionne pour différents éléments d'image des canaux d'évaluation différents et on les utilise pour la production d'une valeur d'intensité de l'élément d'image concerné, dans lequel un signal de résultat intermédiaire est un signal fourni par un des canaux d'évaluation temporellement avant l'émission du signal de résultat du canal d'évaluation, et on opère la sélection par comparaison du signal de résultat et/ou du signal de résultat intermédiaire respectif avec une ou plusieurs valeur(s) de seuil prédéterminée(s) ou par détermination d'un rapport signal-bruit respectif pour chaque signal de résultat et sélection du signal de résultat qui présente le plus petit rapport signal-bruit, **caractérisé en ce que** l'on règle une amplification du détecteur ou une intensité lumineuse d'excitation d'une source de lumière en fonction d'un signal de résultat intermédiaire.

2. Procédé selon la revendication 1, dans lequel on opère la sélection pendant le balayage.

3. Procédé selon une revendication 1 ou 2, dans lequel on détermine pour la sélection d'au moins un des signaux de résultat et/ou d'au moins un des signaux de résultat intermédiaire un degré d'une aptitude du signal de résultat ou du signal de résultat intermédiaire concerné à générer l'image à plage dynamique élargie.

4. Procédé selon l'une quelconque des revendications précédentes, dans lequel on effectue exactement une opération de balayage pour la génération de l'image à plage dynamique élargie, qui correspond à une unification des plages dynamiques de plusieurs canaux d'évaluation.

5. Procédé selon l'une quelconque des revendications précédentes, dans lequel on opère pour chaque zone d'échantillon la sélection du signal de résultat à l'aide d'un signal de résultat respectif, qui indique un nombre de photons, et/ou à l'aide d'un signal de résultat intermédiaire respectif, qui indique un nombre de photons, en effectuant une comparaison du nombre de photons indiqué avec une valeur de seuil prédéterminée.
